# EUROPÄISCHE PATENTSCHRIFT

(11) **EP 1 384 773 B1**
(45) Veröffentlichungstag und Bekanntmachung des Hinweises auf die Patenterteilung: **22.03.2006**
(21) Anmeldenummer: 02016781.3
(22) Anmeldetag: 26.07.2002
(51) Int. Cl.: C12C 7/17

(54) **Läuterbottich mit Sammelwanne**
Lauter tun with collecting trough
Cuve filtre avec bac de collection

(43) Veröffentlichungstag der Anmeldung: 28.01.2004
(73) Patentinhaber: KRONES Aktiengesellschaft, 93073 Neutraubling (DE)
(72) Erfinder: Stippler, Kurt, Dr., 85417 Marzling (DE); Wasmuht, Klaus-Karl, 91792 Ellingen (DE)
(74) Vertreter: Grünecker, Kinkeldey, Stockmair & Schwanhäusser Anwaltssozietät

(56) Entgegenhaltungen:
- DE-C- 211 868
- DE-C- 481 616
- DE-C- 666 641
- US-A- 3 395 635

## Beschreibung

Die Erfindung betrifft einen Läuterbottich gemäß dem Oberbegriff des Patentanspruchs 1.

Der Läuterbottich ist das älteste und weitaus verbreitetste Läutergerät. Er wird zur Bierherstellung eingesetzt, um aus Maische die Würze zu gewinnen. Der Läuterbottich besteht im Wesentlichen aus einem zylindrischen Gefäß, auf dessen Senkboden, der oberhalb des Bottichbodens angeordnet ist, die Treber liegen bleiben, die die Würze dann filtrieren. Bislang wurden zum Abziehen der Würze Anstichöffnungen gleichmäßig über den Bottichboden verteilt, wobei ca. pro 1 m² Grundfläche eine Anstichöffnung vorgesehen ist. Die Anstichöffnungen wurden über jeweilige Auslaufkoni mit entsprechenden Läuterrohren verbunden. Nachteilig hierbei sind die hohen Kosten der Läuterrohre und der hohe konstruktive Aufwand, da neben den Läuterrohren auch noch eine Ringleitung zum Auffangen der Würze benötigt wird.

Hiervon ausgehend liegt der vorliegenden Erfindung die Aufgabe zugrunde, einen Läuterch bereit zu stellen, der eine vereinfachte und kostengünstigere Einrichtung zum Abziehen der Würze aufweist.

Erfindungsgemäß wird diese Aufgabe dadurch gelöst, dass die Einrichtung zum Abziehen der Würze eine am Läuterbottich umlaufende Sammelwanne aufweist, von der mindestens eine Ableitung wegführt.

DE 666 641 offenbast einen Läuterbottich mit Sammelwanne.

Der erfindungsgemäße Läuterbottich bringt eine vereinfachte Herstellung mit sich, da insbesondere die aufwändige Bearbeitung des schweren und großflächigen Bottichbodens entfällt. Weiter können die Materialkosten bei der Herstellung des erfindungsgemäßen Läuterbottichs wesentlich reduziert werden, da zum Ableiten der Würze keine Läuterrohre und Ringleitungen mehr erforderlich sind. Da das komplizierte Ableitungssystem unterhalb des Bottichbodens entfällt, ergibt sich darüber hinaus eine geringere Bauhöhe des Läuterbottichs.

In der Regel ist es ausreichend, dass von der Sammelwanne ein oder zwei Ableitungen wegführen.

Gemäß einem bevorzugten Ausführungsbeispiel der vorliegenden Erfindung weist der Läuterbottich in einem Bereich unterhalb des Senkbodens an seiner Außenseite und/oder Innenseite über den Umfang verteilte Austrittsöffnungen auf, durch die die Würze in die Sammelwanne läuft. Diese Ausführungsform bringt den Vorteil mit sich, dass der Bottichboden überhaupt nicht bearbeitet werden muss. Dadurch, dass die Würze nicht senkrecht nach unten aus dem Läuterbottich abläuft, kann darüber hinaus der Sog, der auf die Treber wirkt, reduziert werden. Alternativ dazu können die Austrittsöffnungen auch umlaufend in einem äußeren und/oder inneren Bereich des Bottichbodens angeordnet sein, wobei die Würze dann über diese Austrittsöffnungen direkt in die Sammelwanne läuft. Zwar muss bei diesem Ausführungsbeispiel die Bodenplatte bearbeitet werden, jedoch ist die Herstellung dennoch weitaus einfacher als beim Stand der Technik, da an die Öffnungen keine Auslaufkoni mit entsprechenden Läuterrohren angebracht werden müssen.

Gemäß der vorliegenden Erfindung ist die Sammelwanne - seitlich an Innen- und/oder Außenseite des Läuterbottichs - und/oder unterhalb des Läuterbottichs angeordnet.

Gemäß einer bevorzugten Ausführungsform weist die Sammelwanne ein zur Ableitung hin verlaufendes Gefälle auf. Dadurch kann die Würze in der Sammelwanne leicht zum Ablauf hin laufen, und staut sich nicht, selbst wenn nur eine oder zwei Ableitungen vorhanden sind.

Bei dem erfindungsgemäßen Läuterbottich läuft die Würze durch die Treber und wird dabei filtriert. Dabei stellen die Treber einen Strömungswiderstand dar, der bewirkt, dass ein Sog entsteht, da mehr Würze abzufließen versucht als nachfließen kann. Dieser Sog bewirkt, dass sich die Treber zusammenziehen und damit den Widerstand weiter vergrößern. Das kann schließlich dazu führen, dass immer weniger Würze abfließen kann, was den Läuterungsprozess wesentlich hinauszögert. Aus diesem Grunde weist die Einrichtung zum Abziehen der Würze eine Einrichtung zum Vermindern des Sogs auf. Durch diese Einrichtung wird dem Sog entgegengewirkt, so dass sich die Treber nicht zusammenziehen, und das Abläutem rascher verläuft. Gemäß einer bevorzugten Ausführungsform ist die Einrichtung zum Vermindern des Sogs als Überlauf ausgebildet, dessen oberes Ende mindestens auf gleichem Niveau wie der Senkboden liegt.

Vorteilhafterweise umfasst die Sammelwanne ein Steigrohr z.B. zur Bestimmung des Saugdrucks. Die Höhe der im Steigrohr aufsteigenden Würze erlaubt einen direkten Rückschluss auf den Treberwiderstand, so dass der Prozess entsprechend geregelt werden kann.

Es ist vorteilhaft, wenn die Maischezuleitung des erfindungsgemäßen Läuterbottichs in der Mitte des Läuterbottichs angeordnet ist.

Gemäß einer anderen Ausführungsform umfasst die Sammelwanne mehrere Segmente, wobei die Anzahl der Ableitungen mindestens der Anzahl der Segmente entspricht.

Der erfindungsgemäße Läuterbottich wird anhand der nachfolgenden Figuren näher erläutert. Dabei zeigen:
- Fig. 1: einen schematischen Schnitt durch einen erfindungsgemäßen Läuterbottich;
- Fig. 2: eine schematische, teilweise aufgerissene Vorderansicht des erfindungsgemäßen Läuterbottichs;
- Fig. 3: einen Ausschnitt z aus dem in Fig. 1 gezeigten Läuterbottich, der eine Sammelwanne zeigt, die gemäß einer weiteren Ausführungsform der vorliegenden Erfindung ausgebildet ist;
- Fig. 4: eine schematische Draufsicht auf den in Figur 1 dargestellten Läuterbottich.
- Fig. 5: einen schematischen Schnitt durch ein weiteres Ausführungsbeispiel gemäß der vorliegenden Erfindung.

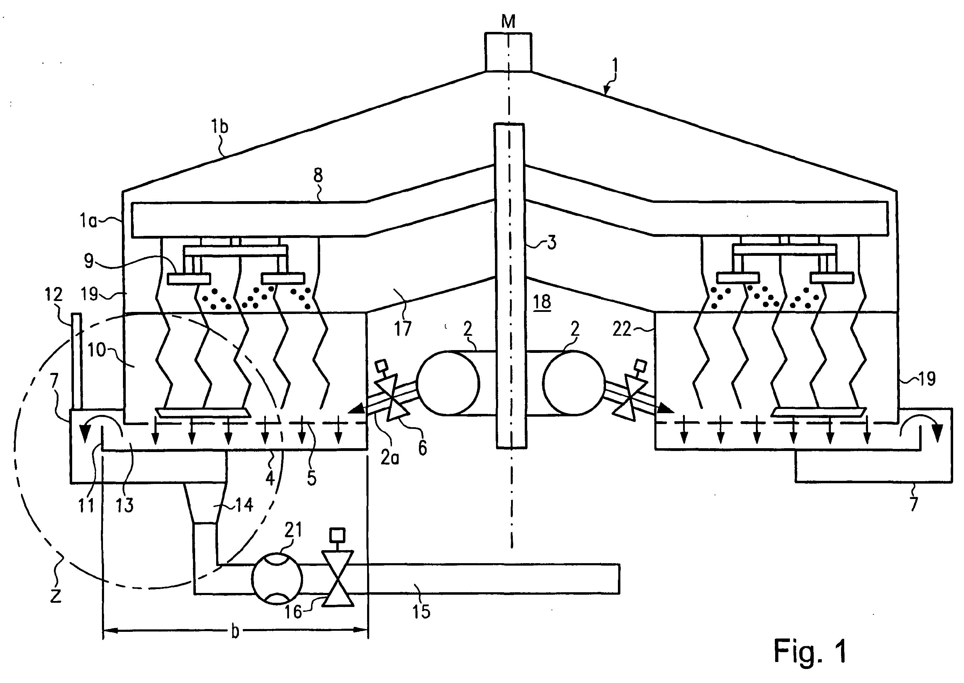

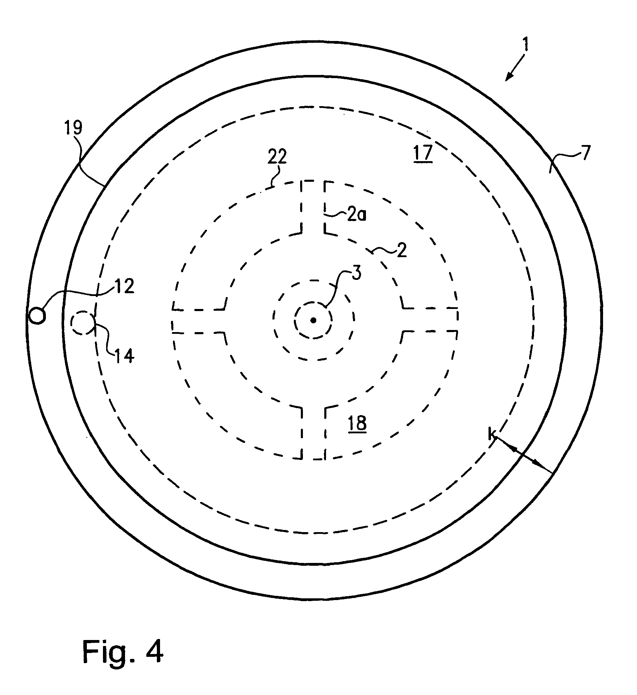

Fig. 1 zeigt schematisch den Querschnitt eines erfindungsgemäßen Läuterbottichs 1. Der Läuterbottich (1) besteht im Wesentlichen aus einem zylindrischen Gefäß 1 a mit einer Dunsthaube 1 b. Der Läuterbottich (1) weist einen nicht dargestellten Zulauf, z. B. für Maische auf, der von unten in einen Maischeverteiler 2 führt. Der Maischeverteiler 2 ist in einem zentralen Freiraum 18 um eine zentrale Antriebswelle 3 herum angeordnet und vom eigentlichen Läuterinnenraum 17 umgeben. Der Maischeverteiler 2 ist hier ringförmig ausgebildet und umgibt die zentrale Antriebswelle 3 (siehe auch Fig. 4). Von dem Maischeverteiler 2 gehen Maischezulaufstutzen 2 ab, die in den Innenraum 17 münden. Die Zufuhr, z. B. die Zufuhr der Maische, kann über ein Stellventil 6 geregelt und abgesperrt werden. Während in der Fig. 4 vier Maischezulaufstutzen 2a gezeigt sind, können auch beispielsweise nur zwei Zulaufstutzen verwendet werden. Auch ist es möglich, ganz auf den Verteiler 2 zu verzichten und die Zuleitung direkt in den Innenraum 17 des Läuterbottichs 1 münden zu lassen, wobei der Zulauf in einem mittleren Bereich des Läuterbottichs 1 innerhalb des zentralen Freiraums 18 angeordnet ist. Der zentrale Freiraum 18 des Läuterbottichs 1 ist hier zylindrisch ausgebildet und ist nach unten offen.

Im Innenraum 17 des Läuterbottichs 1 ist weiter eine Aufhack- und Austrebereinrichtung 8 mit Aufhackmessem 10 gezeigt. Weiterhin sind Sprüheinrichtungen 9 z. B. zum Anschwänzen vorgesehen. Die Aufhack- und Austrebereinrichtung 8 wird durch die zentrale Antriebswelle 3 in Drehung versetzt und kann nach oben und unten angehoben oder abgesenkt werden, um die Schnitttiefe der Hackmesser 10 zu bestimmen.

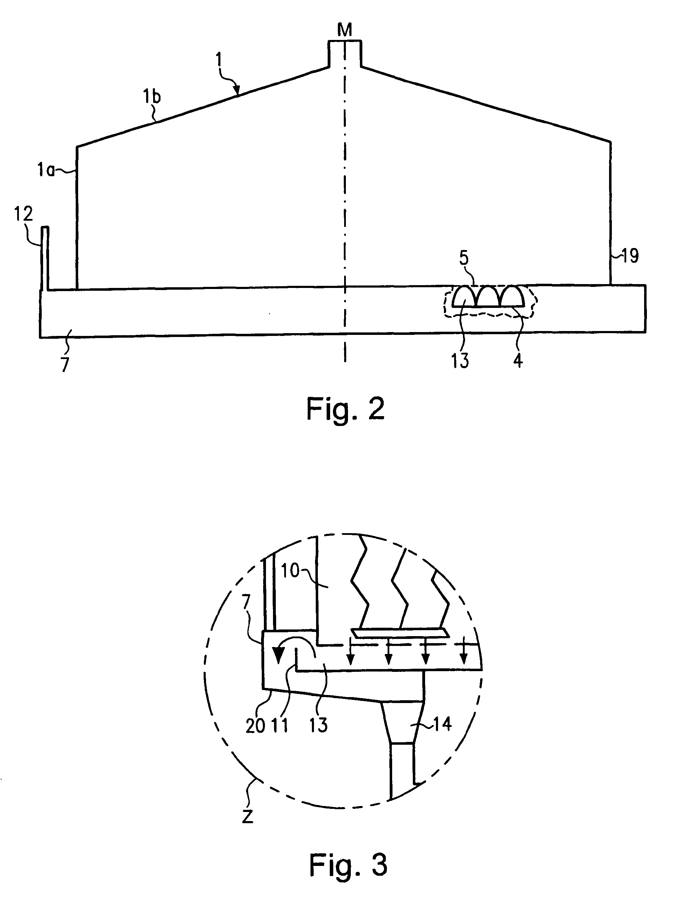

Nach unten wird der Läuterbottich 1 durch den Bottichboden 4, der ringförmig ausgebildet ist, begrenzt. Oberhalb des Bottichbodens 4 ist ein Senkboden 5 angeordnet, der eine Siebstruktur aufweist, und auf dem sich die Treber als natürliche Filterschicht ablagern können. Wie insbesondere aus der Fig. 2 hervorgeht, weist dieses Ausführungsbeispiel an der Außenseite 19 des Läuterbottichs 1 über den Umfang des Läuterbottichs verteilte Austrittsöffnungen 13 auf, durch die die Würze aus dem Läuterbottich (1) austreten kann. Bei diesem Ausführungsbeispiel erstreckt sich die Höhe der Öffnungen 13 vom Bottichboden 4 bis hin zum Senkboden 5. Es wäre auch vorstellbar, dass nicht wie in Fig. 2 gezeigt, mehrere Öffnungen 13 über den Umfang verteilt angeordnet sind, sondern eine einzige umlaufende Öffnung vorgesehen ist. Aus Stabilitätsgründen ist jedoch die in Fig. 2 gezeigte Lösung mit mehreren nebeneinander angeordneten Austrittsöffnungen 13 vorteilhafter. Die Öffnungen 13 münden in eine um den Läuterbottich (1) umlaufende Sammelwanne 7, wie aus Fig. 1, 2 und 4 deutlich wird. Bei diesem Ausführungsbeispiel ist die Sammelwanne 7 ringförmig ausgebildet. Sie ist an die Außenseite 19 und die Unterseite des Bottichbodens 4 angesetzt und wird beispielsweise angeschweißt. Von der umlaufenden Sammelwanne 7 führt zumindest eine Ableitung 15 weg, die wiederum über einen Trichter 14 mit einer Öffnung in der Sammelwanne verbunden ist. In diesem Ausführungsbeispiel ist eine Ableitung 15 gezeigt. Vorzugsweise werden eine oder zwei Ableitungen verwendet. In der Ableitung 15 ist ein Stell- und Absperrventil 16 angeordnet, um den Fluss der Würze über einen induktiven Durchflussmesser 21 einzustellen bzw. abzusperren. In der Sammelwanne 7 ist weiter ein Überlauf 11 ausgebildet. Der Überlauf 11 erstreckt sich hier von einer Verlängerung des Bottichbodens 4, der über die Außenseite 19 des Läuterbottichs 1 hervorsteht nach oben, so dass das obere Ende des Überlaufs 11 mindestens auf gleichem Niveau wie der Senkboden 5 liegt. In dieser Ausführungsform weist der Bottichboden 4 eine größere Breite b auf als der Senkboden 5 sowie eine größere Breite b als der ringförmig ausgebildete Innenraum 17 des Läuterbottichs 1, so dass der Bottichboden 4 nach außen übersteht. Der Überlauf 11 ist vorgesehen, um den Sog zu vermindern, der dadurch entsteht, dass mehr Würze abzufließen versucht als durch den Treberwiderstand nachfließen kann. Ein solcher Sog bewirkt, dass sich die Treber, die auf dem Senkboden 5 als natürliche Filterschicht liegen, zusammenziehen, wodurch der Treberwiderstand wiederum vergrößert wird. Dies könnte schließlich wieder dazu führen, dass immer noch weniger Würze abfließen kann. Das wiederum würde den Läuterprozess wesentlich hinauszögern. Die gefilterte Würze, die durch den Senkboden 5 tritt, verlässt somit den Raum zwischen Bottichboden 4 und Senkboden 5 durch die Austrittsöffnungen 13, passiert den Überlauf 11 und kann schließlich über den Trichter 14 in die Ableitung 15 fließen. Der Überlauf 11 ist ebenfalls im Wesentlichen konzentrisch zum Läuterbottich (1) angeordnet.

An der Sammelwanne 7 ist ein Steigrohr 12 angeordnet, in das Würze aus der Sammelwanne 7 aufsteigen kann. Die Steighöhe der Würze entspricht dem Saugdruck, über den wiederum der Treberwiderstand ermittelt werden kann, so dass der Prozess entsprechend gesteuert werden kann.

Wie aus Fig. 3 hervorgeht, die einen Ausschnitt z des in Fig. 1 gezeigten Läuterbottichs gemäß einem weiteren Ausführungsbeispiel zeigt, kann die Sammelwanne 7 ein Gefälle 20 zur Ableitung 15 hin aufweisen. Die Sammelwanne 7 kann auch so ausgebildet werden, dass die Öffnung der Sammelwanne 7, die in Verbindung mit der Ableitung 15 steht, (bzw. mit dem Trichter 14) der tiefste Punkt des Sammelwannenbodens sowohl in radialer (Fig. 3) als auch in Umfangsrichtung (nicht gezeigt) ist.

Wenn auch nicht in den Figuren 1 bis 4 dargestellt, so ist die Erfindung nicht darauf beschränkt, dass sich die Auslauföffnungen 13 an der Außenseite 19 des Läuterbottichs 1 befinden. Es ist auch denkbar, die Auslauföffnungen 13 im äußeren Randbereich über den Umfang der Bodenplatte verteilt, in dem Bottichboden 4 vorzusehen, wobei die Würze dann durch die Auslauföffnungen 13 in den Bottichboden 4 in die Sammelwanne 7 läuft und von dort aus in den Ablauf 15. Es kann dann ebenfalls eine Einrichtung zur Reduzierung des Sogs integriert werden, wobei die Würze dann wieder nach oben bis zu einem Niveau, das dem des Senkbodens 5 entspricht, geführt wird. Als Material für die Sammelwanne 7 dient vorzugsweise Cr-Ni Stahl.Das Innenvolumen-der Wanne kann so bemessen sein, dass sie wenigstens den Inhalt zwischen Bottichboden 4 und Senkboden 5 aufnehmen kann.

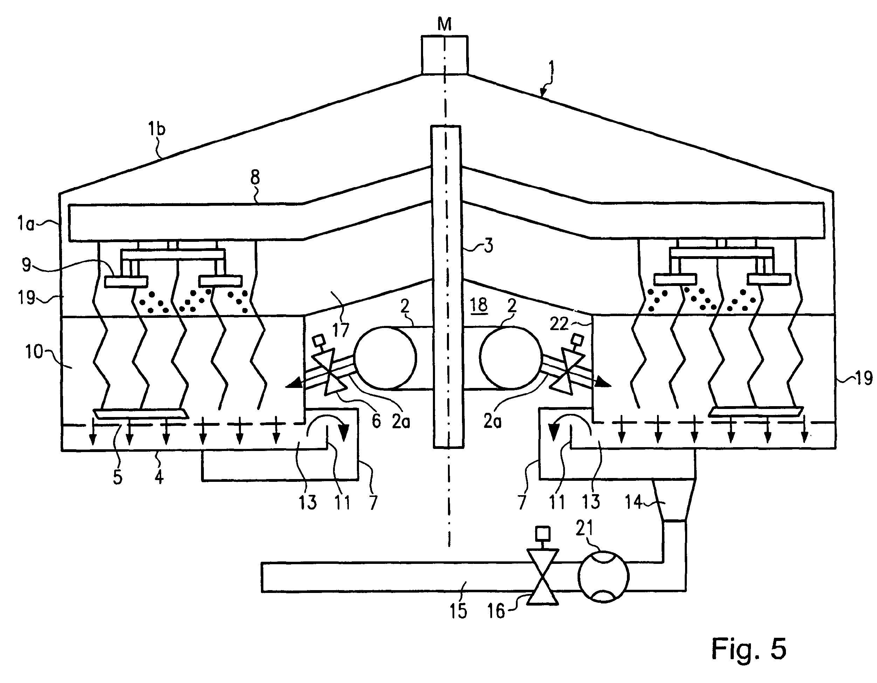

Die Figur 5 zeigt ein weiteres Ausführungsbeispiel gemäß der vorliegenden Erfindung, das den im Zusammenhang mit den Figuren 1 bis 4 gezeigten Ausführungsformen entspricht, mit der Ausnahme, dass die Sammelwanne 7 hier nicht um die Läuterbottichaußenseite 19 umläuft, sondern um die Innenseite 22 des Läuterbottichs 1. Die Sammelwanne 7 ist auch hier ringförmig ausgebildet und wird an die Innenseite 22 und die Unterseite des Bottichbodens 4 angesetzt und beispielsweise angeschweißt. Auch hier führt zumindest eine Ableitung 15 weg, die wiederum über einen Trichter 14 mit einer Öffnung in der Sammelwanne verbunden ist. Die Austrittsöffnungen 13 sind hier zwischen Bottichboden 4 und Senkboden 5 an der Innenseite 22 über den inneren Umfang verteilt angeordnet. Wenn auch in der Zeichnung nicht dargestellt, kann auch bei dieser Ausführungsform an der Sammelwanne im Freiraum 18 ein Steigrohr z.B. mit einer Niveausonde angeordnet sein.

Es besteht auch die Möglichkeit, dass die Sammelwanne 7 sowohl an der Außenseite 19 (Figur 1), sowie an der Innenseite (Figur 5) angesetzt ist und sich unterhalb des Bottichbodens 4 von der Außenseite zur Innenseite hin erstreckt. Bei den in Figuren 1 und 5 gezeigten Ausführungsbeispielen verläuft die Sammelwanne 7 jeweils entweder an der Außenseite 19 und der Unterseite des Läuterbottichs bzw. an der Innenseite 22 und der Unterseite des Bottichbodens, wobei seitliche Austrittsöffnungen 13 (s. Figuren 1 und 5) vorgesehen sind. Die Öffnungen können jedoch auch, wie bereits erwähnt, im Bottichboden angeordnet sein. Es ist jedoch auch denkbar, dass die Sammelwanne 7 nicht seitlich sondern ausschließlich unterhalb des Bottichbodens 4 ringförmig angeordnet ist, wobei dann die Austrittsöffnungen 13 im Bottichboden 4 angeordnet sind.

In Fig. 4 und 5 ist gezeigt, dass die umlaufende Sammelwanne 7 einstückig ausgebildet ist. Wenn auch in den Zeichnungen nicht näher dargestellt, so ist es auch möglich, dass die Sammelwanne 7, die um den Läuterbottich (1) angeordnet ist, mehrteilig ausgebildet ist (z. B. zwei-, drei- oder vierteilig), wobei dann die Anzahl der Ableitungen 15 zumindest der Anzahl der Sammelwannenteile entspricht.

Durch die Verwendung einer umlaufenden Sammelwanne, die anstelle eines komplexen Läuterrohrsystems verwendet wird, kann der erfindungsgemäße Läuterbottich (1) wesentlich vereinfacht werden.

## Patentansprüche

1. Läuterbottich (1) mit einem Bottichboden (4), einem darüber angeordneten Senkboden (5), sowie einer Einrichtung zum Abziehen der Würze (7), **dadurch gekennzeichnet, dass** die Einrichtung zum Abziehen der Würze (7) eine am Läuterbottich umlaufende Sammelwanne (7) aufweist, von der mindestens eine Ableitung (15) wegführt, und in der Sammelwanne (7) zum Vermindern des Sogs ein Überlauf (11) ausgebildet ist, dessen oberes Ende mindestens auf gleichem Niveau wie der Senkboden (5) liegt.

2. Läuterbottich (1) nach Anspruch 1, **dadurch gekennzeichnet, dass** von der Sammelwanne (7) ein oder zwei Ableitungen (15) wegführen.

3. Läuterbottich nach einem der Ansprüche 1 oder 2, **dadurch gekennzeichnet, dass** der Läuterbottich in einem Bereich unterhalb des Senkbodens (5) an seiner Außenseite (19) und/oder Innenseite (22) über den Umfang verteilte Austrittsöffnungen (13) aufweist, durch die die Würze in die Sammelwanne (7) läuft.

4. Läuterbottich (1) nach Ansprüchen 1 oder 2, **dadurch gekennzeichnet, dass** der Bottichboden (4) im äußeren und/oder inneren Bereich Austrittsöffnungen (13) aufweist, über die die Würze in die Sammelwanne (7) läuft.

5. Läuterbottich (1) nach mindestens einem der vorhergehenden Ansprüche, **dadurch gekennzeichnet, dass** die Sammelwanne (7) seitlich an Innen- und/oder Außenseite (19/22) des Läuterbottichs und/oder unterhalb des Läuterbottichs (1) angeordnet ist.

6. Läuterbottich (1) nach mindestens einem der vorhergehenden Ansprüche, **dadurch gekennzeichnet, dass** die Sammelwanne (7) ein zur Ableitung (15) hin verlaufendes Gefälle (20) aufweist.

7. Läuterbottich (1) nach mindestens einem der vorhergehenden Ansprüche, **dadurch gekennzeichnet, dass** die Sammelwanne (7) ein Steigrohr (12) umfasst.

8. Läuterbottich (1) nach mindestens einem der vorhergehenden Ansprüche, **dadurch gekennzeichnet, dass** in der Mitte des Läuterbottichs (1) eine Zuleitung (2), insbesondere eine Maischezuleitung (2) angeordnet ist.

9. Läuterbottich (1) nach mindestens einem der vorhergehenden Ansprüche, **dadurch gekennzeichnet, dass** die Sammelwanne (7) mehrere Segmente umfasst und die Anzahl der Ableitungen mindestens der Anzahl der Segmente entspricht.

## Claims

1. A lauter tun (1) comprising a tub bottom (4) and a false bottom (5) arranged on top of said tub bottom (4) as well as a device (7) for withdrawing the wort, **characterized in that** said device (7) for withdrawing the wort comprises a collecting pan (7) which extends circumferentially around the lauter tun and from which at least one discharge line (15) leads away, and that said collecting pan (7) has formed therein an overflow (11) which is used for reducing the suction and the upper end of which is positioned at least on the same level as the false bottom (5).

2. A lauter tun (1) according to claim 1, **characterized in that** one or two discharge lines (15) lead away from the collecting pan (7).

3. A lauter tun according to one of the claims 1 or 2, **characterized in that**, in an area below the false bottom (5), the lauter tun has on the outer surface (19) and/or on the inner surface (22) thereof circumferentially distributed outlet openings (13) through which the wort flows into the collecting pan (7).

4. A lauter tun (1) according to claim 1 or 2, **characterized in that** the tub bottom (4) has in the outer and/or inner area(s) thereof outlet openings (13) through which the wort flows into the collecting pan (7).

5. A lauter tun (1) according to at least one of the preceding claims, **characterized in that** the collecting pan (7) is arranged laterally on the inner and/or outer surface(s) (19/22) of the lauter tun and/or below the lauter tun (1).

6. A lauter tun (1) according to at least one of the preceding claims, **characterized in that** the collecting pan (7) has a downward slope (20) towards the discharge line (15).

7. A lauter tun (1) according to at least one of the preceding claims, **characterized in that** the collecting pan (7) comprises a rising pipe (12).

8. A lauter tun (1) according to at least one of the preceding claims, **characterized in that** a supply line (2), in particular a mash supply line (2), is arranged in the middle of the lauter tun (1).

9. A lauter tun (1) according to at least one of the preceding claims, **characterized in that** the collecting pan (7) comprises a plurality of segments and that the number of discharge lines corresponds at least to the number of segments.

## Revendications

1. Cuve filtre (1) dotée d'un fond de cuve (4), d'un fond incliné (5) disposé dessus, ainsi que d'un agencement destiné à retirer le moût (7), **caractérisée en ce que** l'agencement destiné à retirer le moût (7) est un bac de collection (7) entourant la cuve filtre, bac d'où part au moins une conduite d'évacuation (15), et qu'un déversoir (11), dont l'extrémité supérieure se situe au moins au même niveau que le fond incliné (5), est formé dans le bac de collection (7) pour réduire l'aspiration.

2. Cuve filtre (1) selon la revendication 1, **caractérisée en ce qu'**une ou deux conduite(s) d'évacuation (15) partent du bac de collection (7).

3. Cuve filtre selon la revendication 1 ou 2, **caractérisée en ce que** la cuve filtre comprend dans une zone située au-dessous du fond incliné (5), sur sa face externe (19) et/ou sa face interne (22), des orifices de sortie (13) répartis sur la périphérie, à travers lesquels le moût s'écoule dans le bac de collection (7).

4. Cuve filtre (1) selon la revendication 1 ou 2, **caractérisée en ce que** le fond de cuve (4) comprend dans des zones externe et/ou interne des orifices de sortie (13) par lesquels le moût s'écoule dans le bac de collection (7).

5. Cuve filtre (1) selon l'une quelconque des revendications précédentes, **caractérisée en ce que** le bac de collection (7) est disposé latéralement sur la face interne et/ou externe (19/22) de la cuve filtre et/ou au-dessous de la cuve filtre (11).

6. Cuve filtre (1) selon l'une quelconque des revendications précédentes, **caractérisé en ce que** le bac de collection (7) comprend une pente (20) s'étendant en direction de la conduite d'évacuation (15).

7. Cuve filtre (1) selon l'une quelconque des revendications précédentes, **caractérisée en ce que** le bac de collection (7) comporte un tube ascendant (12).

8. Cuve filtre (1) selon l'une quelconque des revendications précédentes, **caractérisée en ce qu'**une conduite d'alimentation (2), notamment une conduite d'alimentation en maïs (2), est disposée au centre de la cuve filtre (1).

9. Cuve filtre (1) selon l'une quelconque des revendications précédentes, **caractérisée en ce que** le bac de collection (7) comporte plusieurs segments et le nombre des conduites d'évacuation correspond au moins au nombre des segments.
